# EUROPÄISCHE PATENTSCHRIFT

(11) **EP 1 808 323 B1**
(45) Veröffentlichungstag und Bekanntmachung des Hinweises auf die Patenterteilung: **12.10.2011**
(21) Anmeldenummer: 07000599.6
(22) Anmeldetag: 12.01.2007
(51) Int. Cl.: B60K 7/00, B62D 5/04

(54) **Antriebs- und Lenkeinheit für ein Rad eines Flurförderzeugs**
Drive and steering unit for a wheel of an industrial truck
Unité d'entraînement et d'orientation d'une roue de chariot élévateur

(30) Priorität: 17.01.2006 DE 102006002485
(43) Veröffentlichungstag der Anmeldung: 18.07.2007
(73) Patentinhaber: Jungheinrich Aktiengesellschaft, 22047 Hamburg (DE)
(72) Erfinder: Rogg, Andreas, Dipl.-Ing., 23554 Lübeck (DE)
(74) Vertreter: Hauck Patent- und Rechtsanwälte

(56) Entgegenhaltungen:
- WO-A-2005/077695
- DE-A1- 10 113 775
- DE-A1- 10 328 651

## Beschreibung

Die Erfindung bezieht sich auf eine Antriebs- und Lenkeinheit für ein Rad eines Flurförderzeugs nach dem Anspruch 1.

Eine Antriebs- und Lenkeinheit der eingangs genannten Art ist aus DE 199 49 351 A1 bekannt geworden. Ein Drehschemel für das angetriebene und gelenkte Rad weist eine Gabel auf, die eine horizontale Welle für das Rad lagert. Antriebsmotor und Lenkmotor sind koaxial übereinander angeordnet. Zwischen Antriebs- und Lenkmotor ist ein erstes Getriebe angeordnet, das über eine Welle auf ein Kegelgetriebe wirkt zum Antrieb der Radwelle. Die Motorwelle erstreckt sich durch eine Hohlwelle des Lenkmotors hindurch. Die Hohlwelle wirkt über ein Lenkgetriebe auf den Lenkschemel, um diesen um den gewünschten Lenkwinkel zu verdrehen nach Maßgabe eines Signals eines Lenkwinkelgebers.

Aus DE 103 28 651 (beinhaltet die Merkmale des Oberbegriffs des Anspruchs 1) ist eine ähnliche Antriebs- und Lenkeinheit bekannt geworden, bei der das Lenkgetriebe als Exzentergetriebe ausgeführt ist und sich das Lenkgetriebe im Inneren eines als Vierpunktlager verwendeten Drehschemellagers befindet.

Aus WO 2005/077695 bzw. WO 2005/077696 ist ein Lenk- und Radantrieb für Flurförderzeuge bekannt geworden, bei dem das Lenkgetriebe als mehrstufiges Planetengetriebe ausgebildet ist und das Getriebe innerhalb der Drehschemellagerung angeordnet ist. In der zuletzt angegebenen Druckschrift ist das Lenkgetriebe als sogenanntes Wolfrom-Getriebe ausgebildet, und zwischen Fahr- und Lenkmotor ist eine Bremse angeordnet.

Der Erfindung liegt die Aufgabe zugrunde, eine Antriebs- und Lenkeinheit für ein Rad eines Flurförderzeugs zu schaffen, die klein baut, einen verbesserten Wirkungsgrad aufweist und relativ unaufwendig herstellbar ist.

Diese Aufgabe wird durch die Merkmale des Patentanspruchs 1 gelöst.

Bei der Antriebs- und Lenkeinheit nach Patentanspruch 1 ist für das Lenkgetriebe ein ein- oder mehrstufiges Stufenplanetengetriebe oder Planetenkoppelgetriebe vorgesehen, und die Lagerung des Drehschemels in Form mindestens eines Wälzlagers ist innerhalb des Lenkgetriebes angeordnet. Alternativ können auch ein Exzentergetriebe oder ein reduziertes Planetenkuppelgetriebe vorgesehen sein.

Die erfindungsgemäße Lösung weist mehrere Vorteile auf. So wird der Wirkungsgrad des Lenkgetriebes verbessert. Dadurch kann die Baugröße des Lenkmotors und des Lenkgetriebes kleiner werden. Insgesamt ist der Aufwand für Herstellung und Montage der erfindungsgemäßen Einheiten gering.

Nach einer Ausgestaltung der Erfindung dient ein mit dem Drehschemel verbundener Planetenträger zur Aufnahme der Drehschemellagerung. In diesem Zusammenhang sieht eine weitere Ausgestaltung der Erfindung vor, daß ein erstes Wälzlager zwischen einem ersten Planetenträger einer ersten Planetengetriebestufe und einem ersten Rahmenabschnitt und ein zweites Wälzlager axial beabstandet zum ersten Wälzlager zwischen dem ersten Planetenträger und einem zweiten Rahmenabschnitt oder einem rahmenfesten Planetenträger der zweiten Stufe angeordnet sind. Beide Wälzlager, vorzugsweise Kegelrollenlager, sind somit am beweglichen Planetenträger abgestützt.

Nach einer weiteren Ausgestaltung der Erfindung ist der Abtrieb des Planetengetriebes von einem am Drehschemel befestigten Planetenträger und einem mit dem Drehschemel verbundenen mit einer Stufe der Planeten kämmenden Hohlrad gebildet. Zwischen diesem Hohlrad und dem darüber angeordneten Teil eines Gehäuses für die erfindungsgemäße Einheit kann nach einer weiteren Ausgestaltung der Erfindung eine berührende Dichtung angeordnet werden, um das Eindringen von Verschmutzungen in das Innere der Einheit zu verhindern.

Bei der Ausbildung des Lenkgetriebes als Stufenplanetengetriebe kann nach einer anderen Ausgestaltung der Erfindung ein mit dem Drehschemel verbundener Zapfen zur Abstützung der Drehschemellagerung dienen, etwa in Form von zwei axial beabstandeten Kegelrollenlagern. Bei einem Stufenplanetengetriebe können die Planeten beider Stufen durch eine Verbindungswelle miteinander in Wirkverbindung stehen.

Nach einer weiteren Ausgestaltung der Erfindung können Planetenkoppelgetriebe bzw. Stufenplanetengetriebe ein Planetengetriebe vorgeschaltet sein. Eine andere Ausgestaltung sieht vor, daß die Verbindung von Planetenträger und Drehschemel in axialer Richtung erfolgt und von der Außenseite des Drehschemelgehäuses oder durch eine verschließbare Öffnung des Drehschemelgehäuses lösbar ist.

Ein auf der Fahrmotorwelle lösbar anbringbares Ritzel kann nach einer weiteren Ausgestaltung der Erfindung über eine verschließbare Öffnung im Drehschemelgehäuse gelöst werden.

Nach einer weiteren Ausgestaltung der Erfindung können Planetenträger und Drehschemel in tangentialer Richtung lösbar miteinander verbunden sein. Zu diesem Zweck können durch geeignete tangentiale Öffnungen Stäbe eingeführt werden, um die Drehverbindung herzustellen. Ein Zugang kann wiederum über eine verschließbare Öffnung im Drehschemelgehäuse erfolgen. Das mit dem ersten Planetenträger zusammenwirkende Wälzlager muß in axialer als auch in radialer Richtung abgestützt sein. Hierzu sieht eine Ausgestaltung der Erfindung einen ringförmigen Rahmenabschnitt vor, der in tangentialer Richtung lösbar mit anderen Rahmenabschnitten verbunden ist. Alternativ kann eine Ringplatte zweiteilig ausgebildet sein, wobei der untere Teil als Abstützung des Wälzlagers nach unten dient.

Ausführungsbeispiele der Erfindung werden nachfolgend anhand von Zeichnungen näher erläutert.
- Fig. 1: zeigt einen Schnitt durch ein Planetenkoppelgetriebe für eine Antriebs- und Lenkeinheit nach der Erfindung.
- Fig. 2: zeigt ein Stufenplanetengetriebe für eine Antriebs- und Lenkeinheit nach der Erfindung.
- Fig. 3: zeigt ein Planetenkoppelgetriebe mit Vierpunktlager für eine Antriebs- und Lenkeinheit (nicht beanspruchte Ausführung)
- Fig. 4: zeigt ein Stufenplanetengetriebe mit Vierpunktlager für eine Antriebs- und Lenkeinheit (nicht beanspruchte Ausführung)
- Fig. 5: zeigt einen vergrößerten Schnitt gemäß Fig. 1 in alternativer Darstellung zur Abstützung des Wälzlagers.
- Fig. 6: zeigt einen Schnitt durch die Darstellung nach Fig. 7 entlang der Linie 6-6.
- Fig. 7: zeigt eine ähnliche Darstellung wie Fig. 5, jedoch mit einer anderen Abstützung des Wälzlagers.
- Fig. 8: zeigt eine ähnliche Darstellung wie die Fig. 1 bis 4, jedoch mit einem einteiligen Gehäuse.
- Fig. 9: zeigt ebenfalls eine ähnliche Darstellung wie die Fig. 1 bis 4 mit einstufigem Stufenplanetengetriebe und vorgeschaltetem Planetengetriebe, (nicht beanspruchte Ausführung)

Die in den Figuren dargestellten Antriebs- und Lenkeinheiten weisen einen ähnlichen Aufbau auf. Zunächst werden die gemeinsamen Teile beschrieben.

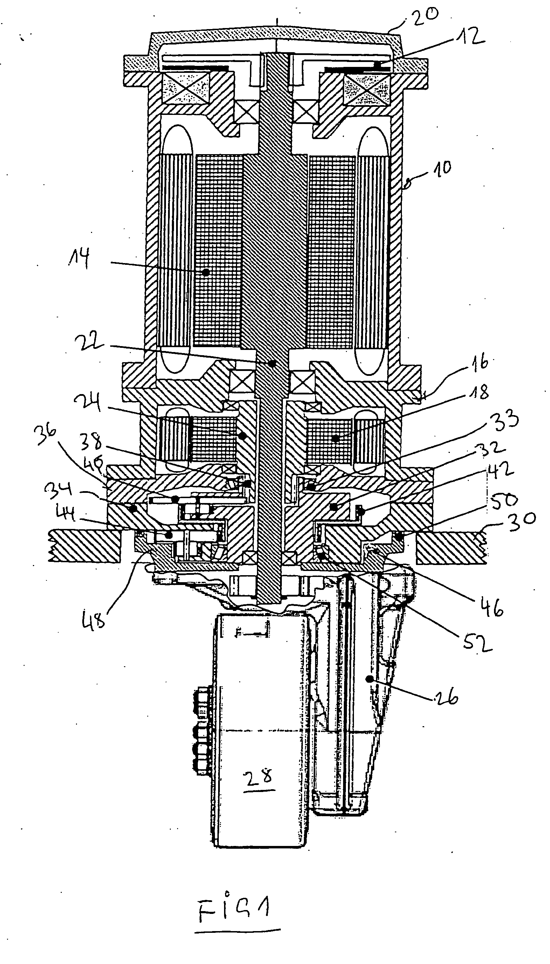

Ein Gehäuse für die in den Fign. 1 bis 4 dargestellte Antriebs- und Lenkeinheit weist mehrere Abschnitte auf. Ein erster Gehäuseabschnitt 10 nimmt eine Bremse 12 und einen Fahrmotor 14 auf. Ein sich nach unten anschließender Gehäuseabschnitt 16 nimmt einen Lenkmotor 18 auf. Der obere Gehäuseabschnitt 10 ist nach oben durch einen Deckel 20 abgeschlossen, und an den unteren Gehäuseabschnitt 16 schließen sich unten Abschnitte an, die ein Getriebe beinhalten, worauf weiter unten noch eingegangen wird.

Der Fahrmotor 14 weist eine Antriebswelle 22 auf, die sich nach oben zur Bremse 12 erstreckt (die Bremse soll im einzelnen nicht beschrieben werden, da sie von bekanntem Aufbau ist). Nach unten erstreckt sich die Welle 22 durch eine Hohlwelle 24 des Lenkmotors 18 zu einem nicht weiter dargestellten Fahrgetriebe, das durch eine Stirnrad- und eine Kegelradstufe innerhalb eines Drehschemels 26 gebildet ist. Am Drehschemel 26 ist ein gelenktes Antriebsrad 28 gelagert. Die Antriebswelle 22 ist durch mehrere Wälzlager in den Gehäuseabschnitten gelagert, worauf nicht weiter eingegangen werden soll.

Die beschriebene Einheit stützt sich auf einem Rahmenabschnitt 30 ab, worauf im einzelnen nicht eingegangen werden soll.

Das in Fig. 1 dargestellte Lenkgetriebe zwischen Lenkmotor 18 und Drehschemel 26 ist ein zweistufiges Planeten-Koppelgetriebe. Es weist einen beweglichen Planetenträger 32 auf sowie einen rahmenfesten Planetenträger 34. Der Planetenträger 32 hat im oberen Bereich einen im Durchmesser kleineren Abschnitt, an dem sich ein Kegelrollenlager 33 abstützt, das auf der anderen Seite auf der Innenseite einer Ringscheibe 36 abgestützt ist. Die Ringscheibe 36 ist zwischen dem Gehäuseabschnitt 16 und dem festen Planetenträger 34 angeordnet und somit rahmenfest. Die Hohlwelle 24 weist Zahnung 38 auf, deren Durchmesser etwas kleiner ist als der Innendurchmesser des das Wälzlager 33 tragenden Planetenträgerabschnitts. Diese Zahnung wirkt mit der im Durchmesser größeren Stufe von Planetenrädern 40 zusammen. Die im Durchmesser kleinere Planetenräderstufe kämmt mit einem Abschnitt eines Ringzahnrads 42, dessen Umfangsquerschnitt annähernd Z-förmig ist. Der im Durchmesser größere Ringabschnitt des Ringrads 32 kämmt mit der kleineren Stufe der Planetenräder 40. Der im Durchmesser kleinere Abschnitt des Ringrads 42 kämmt mit der im Durchmesser größeren Stufe von weiteren Planetenrädern 44, die im Planetenträger 34 gelagert sind. Die im Durchmesser kleinere Stufe der Planetenräder 44 kämmt mit einer Zahnung 46 eines Hohlrads 48, das zum einen fest mit dem Drehschemel 26 und zum anderen mit dem Planetenträger 32 verbunden ist. Eine Dichtung 50 an der oberen Stirnseite des Hohlrads 48 berührt den festen Planetenträger 34 von der Unterseite, um eine Abdichtung des Inneren des gesamten Gehäuses der Einheit herbeizuführen.

Ein weiteres Kegelrollenlager 52, das zum ersten Kegelrollenlager 33 axial beabstandet ist, stützt sich ebenfalls am Planetenträger 32 ab und mit dem äußeren Ring am festen Planetenträger 34. Wie erkennbar, befindet sich somit die Lagerung des Drehschemels 26, welche durch die Wälzlager 33 und 52 gebildet ist, innerhalb des gezeigten Lenkgetriebes. Insgesamt zeichnet sich die dargestellte Konstruktion durch einen guten Wirkungsgrad des Lenkgetriebes und kleine Baugröße von Lenkmotor 18 und dem dargestellten Lenkgetriebe aus.

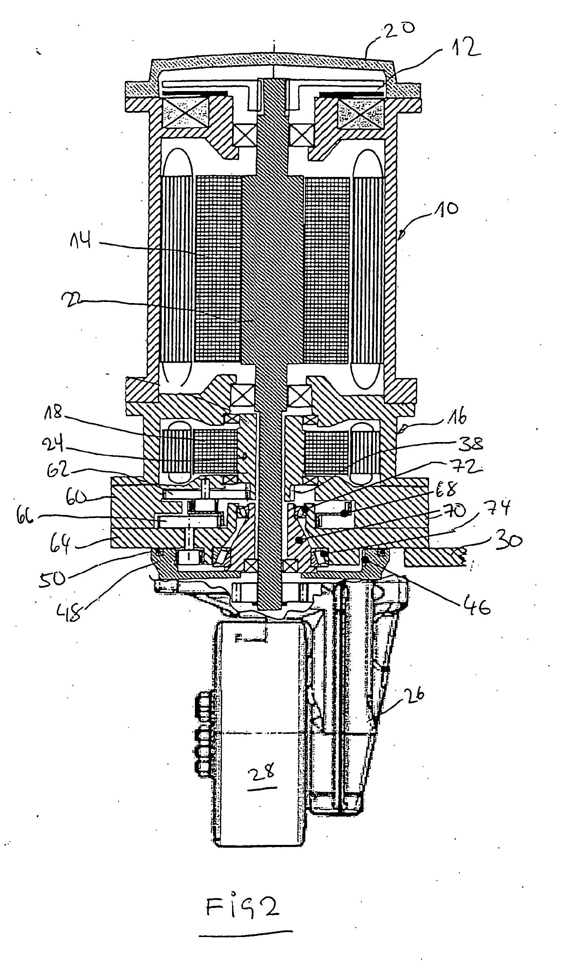

Die Ausführungsform nach Fig. 2 unterscheidet sich von der nach Fig. 1 dadurch, daß ein zweistufiges Stufenplanetengetriebe als Lenkgetriebe vorgesehen ist. Ein erster Planetenträger 60 für zweistufige Planetenräder 62 ist fest mit dem Gehäuseabschnitt 16 verbunden und ein zweiter Planetenträger 64 für zweistufige Planetenräder 66 befindet sich zwischen dem Rahmenabschnitt 30 und dem ersten Planetenträger 60. Die im Durchmesser größere Stufe der Planetenräder 62 kämmen wiederum mit der Zahnung 38 der Hohlwelle 24, während die im Durchmesser kleinere Stufe der Planetenräder 62 in Eingriff ist mit dem im Durchmesser größeren Ringabschnitt eines Ringrads 68, vergleichbar dem Ringrad 42 nach Fig. 1. Der im Durchmesser kleinere Abschnitt des Ringrads 68 kämmt mit der im Durchmesser größeren Stufe der Planetenräder 66. Die im Durchmesser kleinere Stufe der Planetenräder 66 liegt auf der gegenüberliegenden Seite des Planetenträgers 64 und ist mit der Innenverzahnung 46 des Hohlrads 48 in Eingriff. Ein sich vom Hohlrad 48 erstreckender und mit diesem verbundener Zapfen 70 verringert sich im Durchmesser vom Hohlrad 48 nach oben, wobei ein mittlerer Abschnitt konisch geformt ist. Der Zapfen 70 stützt ein oberes Kegelrollenlager 72 mit einem relativ kleinen Durchmessers ab, während der untere Abschnitt ein zweites Kegelrollenlager 74 abstützt. Beide Kegelrollenlager 72, 74 stützen sich auf der gegenüberliegenden Seite am rahmenfesten Planetenträger 64 ab, der mit einem axialen Ringbund nach oben ragt. Auch bei dieser Anordnung befindet sich die Lagerung für den Drehschemel 26 innerhalb des dargestellten Lenkgetriebes.

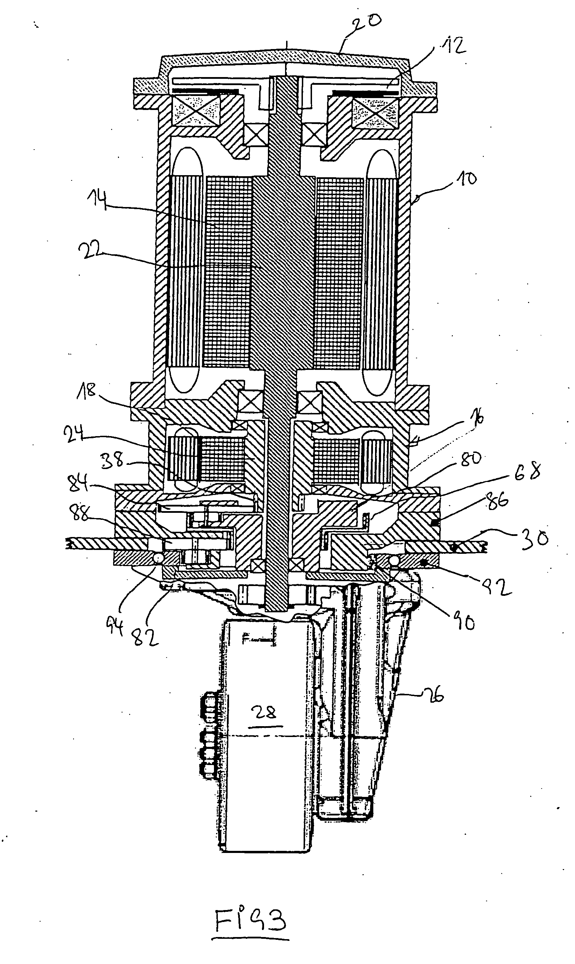

In Fig. 3 wird als Lenkgetriebe wieder ein Planeten-Koppelgetriebe verwendet, und zwar ein zweistufiges. Ein beweglicher Planetenträger 80, der mit einem Hohlrad 82 verbunden ist, das seinerseits fest mit dem Drehschemel 76 verbunden ist, lagert erste gestufte Planetenräder 84, wobei die im Durchmesser größere Stufe mit der Zahnung 38 der Hohlwelle 24 zusammenwirkt und die im Durchmesser kleinere Stufe mit dem äußeren Ring des Ringrades 68 zusammenwirkt. Ein rahmenfester Planetenträger 86 ist mit dem Rahmenabschnitt 30 fest verbunden und lagert gestufte Planetenräder 88, von denen die im Durchmesser größere Stufe mit dem im Durchmesser kleineren Abschnitt des Ringrades 68 zusammenwirkt, während die im Durchmesser kleinere Stufe mit der Innenverzahnung des Hohlrades 82 zusammenwirkt. Die Innenverzahnung ist in Fig. 3 bei 90 angedeutet. Das Hohlrad 82 ist Innenteil eines Vierpunktlagers, dessen äußerer Teil 92 fest mit der Unterseite des Rahmenabschnitts 30 verbunden ist. Im vorliegenden Fall dient das Ringrad 68 als Koppelwelle, und der Abtrieb des Lenkgetriebes erfolgt zum einen über den am Drehschemel 26 befestigten Planetenträger 80 und zum anderen durch das mit der Innenverzahnung 90 versehene Innenteil 82 des Vierpunktlagers 94.

Auch bei Fig. 3 ist das Innere des Gehäuses vollständig gegen das Eindringen von Verschmutzung von außen abgedichtet.

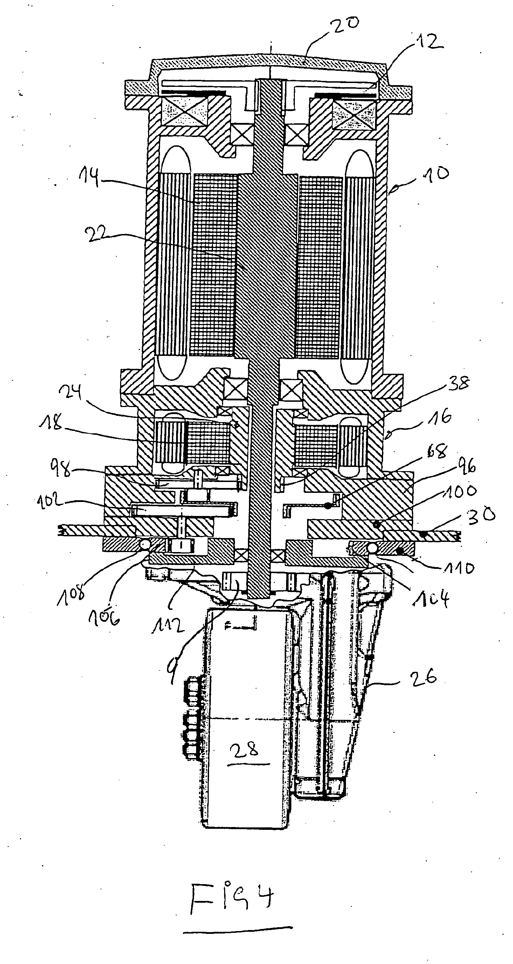

Nach Fig. 4 wird als Lenkgetriebe ein zweistufiges Stufenplanetengetriebe verwendet. Als Verbindungswelle dient das Ringrad 68. Ein erster rahmenfester Planetenträger 96 lagert gestufte Planetenräder 98, deren im Durchmesser größere Stufe mit der Hohlwelle 24 über deren Verzahnung 38 zusammenwirkt, während die im Durchmesser kleinere Stufe mit dem im Durchmesser größeren Abschnitt des Ringrads 68 zusammenwirkt. Ein zweiter Planetenträger 100 lagert gestufte Planetenräder 102, wobei die im Durchmesser größere Stufe der Planetenräder 102 mit dem im Durchmesser kleineren Abschnitt des Ringrades 68 zusammenwirkt, während die auf der anderen Seite des Trägers 100 liegende im Durchmesser kleinere Stufe mit einer Innenverzahnung 104 eines inneren Teil 106 eines Vierpunktlagers 108 zusammenwirkt, dessen äußerer Teil 110 fest mit der Unterseite des Rahmenabschnitts 30 verbunden ist. Der innere Teil 106 des Vierpunktlagers 108 ist fest mit einer Scheibe 112 verbunden, die ihrerseits fest mit dem Drehschemel 26 verbunden ist.

Somit erfolgt der Abtrieb des gezeigten Lenkgetriebes von dem mit der Innenverzahnung 104 versehenen inneren Teil des Vierpunktlagers 108.

Es versteht sich, daß bei allen Ausführungsformen die Hohlwelle 24 über geeignete Lager im zweiten Gehäuseabschnitt 26 gelagert ist bzw. mit am rahmenfesten Planetenträger und daß die Antriebswelle ebenfalls nahe dem Drehschemel noch einmal durch ein geeignetes Wälzlager gegenüber einem drehschemelfesten Abschnitt gelagert ist.

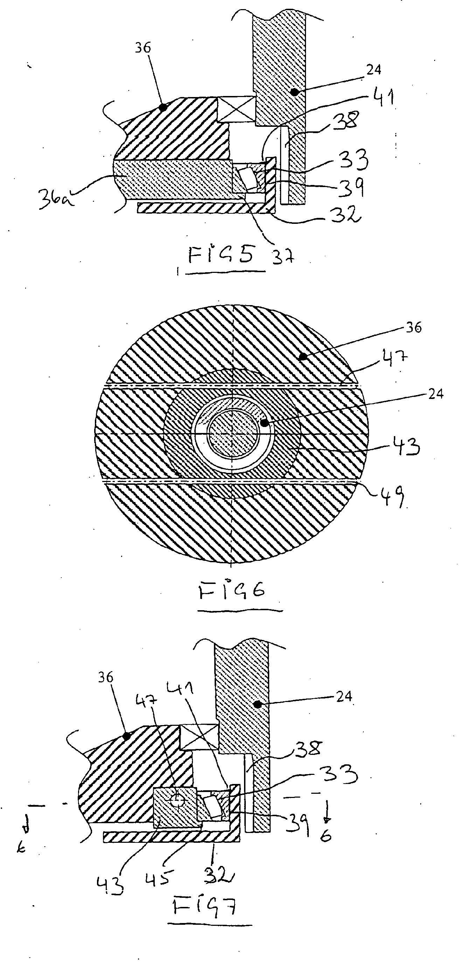

Bei der Ausführungsform nach Fig. 5 ist unterhalb der Ringscheibe 36 eine weitere Ringscheibe 36a angeordnet, welche mit der Ringscheibe 36 verbunden ist. Die Ringscheibe 36a weist innen unten einen ringförmigen Absatz 37 auf, auf dem sich das Wälzlager 33 nach unten abstützt, das im übrigen am Außenumfang mit dem Innenumfang der Scheibe 36a zusammenwirkt. Der Innenumfang des Wälzlagers 33 wirkt mit dem axialen Ringbund 39 des Planetenträgers 32 zusammen, wobei ein Federring 41 das Wälzlager 33 nach oben sichert.

Bei der Ausführungsform nach den Fign. 6 und 7 ist in einer ringförmigen Ausnehmung der Ringscheibe 36 an der Innenseite ein Ring 43 aufgenommen, der am Innenumfang unten einen Absatz 45 aufweist. Der Absatz 45 nimmt wie der Absatz 32 das Wälzlager 33 auf, das von oben mit Hilfe des Federrings 41 gesichert ist. Wie aus Fig. 6 zu erkennen, erstrecken sich durch die Ringscheibe 36 und den Ring 43 tangentiale parallele Bohrungen, die durch Stäbe 47, 49 hindurchgeführt sind, um die beiden Teile miteinander zu verbinden.

Eine derartige tangentiale Verbindung kann auch zwischen dem Planetenträger 32 und dem Drehschemel erfolgen, beispielsweise über das Hohlrad 48 nach Fig. 1. Dies ist jedoch in den Zeichnungen nicht dargestellt.

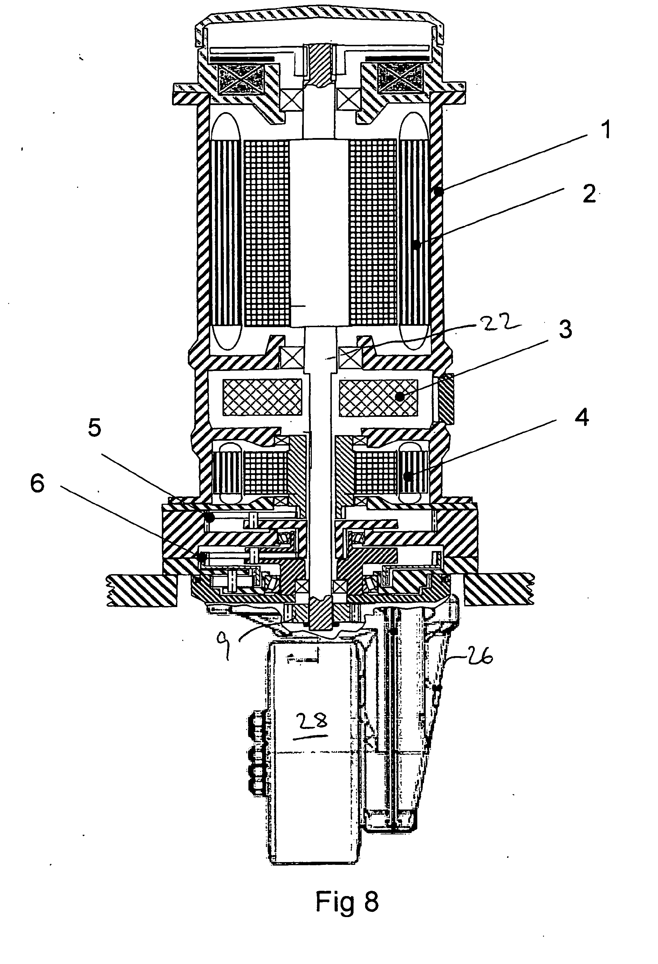

Die Darstellung nach Fig. 8 gleicht grundsätzlich im wesentlichen der nach den Fig. 1 bis 4, so daß, soweit gleiche Teile vorhanden sind, keine erneute Beschreibung vorgenommen wird. Die Besonderheit bei Fig. 8 besteht zum einen darin, daß ein einteiliges Gehäuse für Fahr- und Lenkmotor vorgesehen ist. Der Fahrmotor ist mit 2 und der Lenkmotor mit 4 bezeichnet. Das Lenkgetriebe enthält ein Planetenkoppelgetriebe, dem ein Planetengetriebe vorgeschaltet ist. In dem gemeinsamen Gehäuse 1 zwischen Lenk- und Fahrmotor 2, 4 ist ein Abteil vorgesehen, in dem eine Steuerung 3 angeordnet ist, und zwar sowohl für den Fahr- als auch Lenkmotor 2, 4. Das Abteil mit der Steuervorrichtung 3 befindet sich zwischen diesen beiden Motoren.

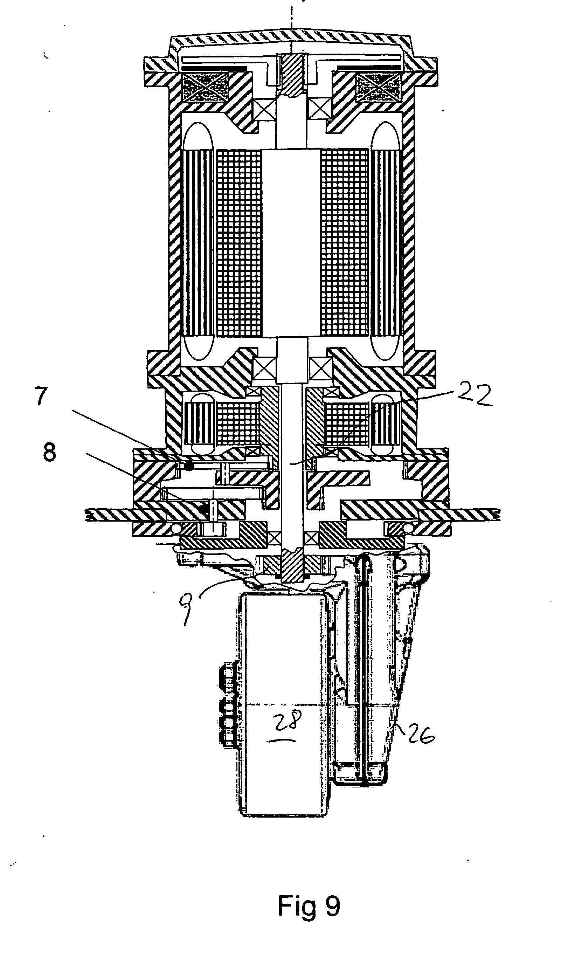

Fig. 9 ist ebenfalls im wesentlichen in Übereinstimmung mit den Darstellungen nach den Fig. 1 bis 4. Dort ist jedoch als Lenkgetriebe ein einstufiges Stufenplanetengetriebe 8 vorgesehen, dem ein Planetengetriebe 7 vorgeschaltet ist.

In den Fig. 1 bis 4 ist die Motorwelle mit 22 bezeichnet. Dies ist auch der Fall in den Fig. 8 und 9. Auf der Motorwelle sitzt drehfest ein Ritzel 9, das mit einem entsprechenden Stirnrad der Stirnrad- und Kegelradgetriebestufe innerhalb des Drehschemels 26 zusammenwirkt.

## Patentansprüche

1. Antriebs- und Lenkeinheit für ein Rad eines Flurförderzeugs, bei der ein Fahrmotor und ein Lenkmotor koaxial untereinander angeordnet und jeweils über ein Fahrgetriebe bzw. ein Lenkgetriebe mit einer Welle des Rades bzw. einem das Rad lagernden Drehschemel gekoppelt sind, wobei eine Welle als Hohlwelle und die andere Welle durch die Hohlwelle hindurch erstreckt ist, **dadurch gekennzeichnet, dass** für das Lenkgetriebe ein ein- oder mehrstufiges Stufenplanetengetriebe oder ein Planetenkoppelgetriebe oder Exzentergetriebe oder reduziertes Planetenkoppelgetriebe vorgesehen ist und die Lagerung des Drehschemels (26) in Form mindestens eines Wälzlagers innerhalb des Lenkgetriebes angeordnet ist.

2. Antriebs- und Lenkeinheit nach Anspruch 1, **dadurch gekennzeichnet, dass** ein mit dem Drehschemel (26) verbundener Planetenträger (32) zur Aufnahme der Drehschemellagerung dient.

3. Antriebs- und Lenkeinheit nach Anspruch 2, **dadurch gekennzeichnet, dass** ein erstes Wälzlager (33) zwischen dem ersten Planetenträger (32) einer ersten Planetengetriebestufe und einem ersten Rahmenabschnitt und ein zweites Wälzlager (52), axial beabstandet zum ersten Wälzlager (33) zwischen dem ersten Planetenträger (32) und einem zweiten Rahmenabschnitt oder einem rahmenfesten zweiten Planetenträger (34) der zweiten Planetengetriebestufe angeordnet ist.

4. Antriebs- und Lenkeinheit nach Anspruch 3, **dadurch gekennzeichnet, dass** der erste Planetenträger mit einem Abschnitt (48) des Drehschemels (26) verbunden ist.

5. Antriebs- und Lenkeinheit nach Anspruch 3 oder 4, **dadurch gekennzeichnet, dass** der erste Rahmenabschnitt (36) von einer Ringplatte gebildet ist, deren Innenumfang das erste Wälzlager (33) abstützt.

6. Antriebs- und Lenkeinheit nach einem der Ansprüche 2 bis 5, **dadurch gekennzeichnet, dass** der Abtrieb des Planetengetriebes von einem am Drehschemel (26) befestigten Planetenträger (32) und einem mit dem Drehschemel (26) verbundenen mit einer Stufe der Planetenräder kämmenden Hohlrad (48) gebildet ist.

7. Antriebs- und Lenkeinheit nach Anspruch 1 oder einem der Ansprüche 2 bis 6, **dadurch gekennzeichnet, dass** zwischen einem Drehschemelabschnitt und einem Gehäuse für die Motoren (14, 18) und das Lenkgetriebe eine berührende Dichtung (50) angeordnet ist.

8. Antriebs- und Lenkeinheit nach Anspruch 6 oder 7, **dadurch gekennzeichnet, dass** die berührende Dichtung (50) am Hohlrad (48) angeordnet ist.

9. Antriebs- und Lenkeinheit nach einem der Ansprüche 3 bis 8, **dadurch gekennzeichnet, dass** eine rahmenfeste Ringplatte (36) und ein rahmenfester Planetenträger (34) aufeinanderliegend auf einer Seite an einem Rahmenabschnitt (30) und auf der gegenüberliegenden Seite am Ende eines zugekehrten Gehäuseteils (16) des Gehäuses für die Einheit anliegen.

10. Antriebs- und Lenkeinheit nach Anspruch 1 oder einem der Ansprüche 2 bis 9, **dadurch gekennzeichnet, dass** bei Ausbildung als Stufenplanetengetriebe ein mit dem Drehschemel (26) verbundener Zapfen (70) zur Aufnahme der Drehschemellagerung dient.

11. Antriebs- und Lenkeinheit nach Anspruch 10, **dadurch gekennzeichnet, dass** am Zapfen (70) zwei axial beabstandete Kegelrollenlager (72, 74) angeordnet sind.

12. Antriebs- und Lenkeinheit nach Anspruch 1 oder einem der Ansprüche 2 bis 10, **dadurch gekennzeichnet, dass** bei Ausbildung als Stufenplanetengetriebe die Planetenräder beider Stufen durch eine Verbindungswelle (68) miteinander in Wirkverbindung stehen.

13. Antriebs- und Lenkeinheit nach Anspruch 1, **dadurch gekennzeichnet, dass** dem Planetenkoppelgetriebe (6) ein Planetengetriebe (5) vorgeschaltet ist.

14. Antriebs- und Lenkeinheit nach Anspruch 1, **dadurch gekennzeichnet, dass** dem Stufenplanetengetriebe (8) ein Planetengetriebe (7) vorgeschaltet ist.

15. Antriebs- und Lenkeinheit nach einem der Ansprüche 1 bis 14, **dadurch gekennzeichnet, dass** die Verbindung von Planetenträger und Drehschemel in axialer Richtung erfolgt und von der Außenseite des Drehschemelgehäuses oder durch eine verschließbare Öffnung des Drehschemelgehäuses lösbar ist.

16. Antriebs- und Lenkeinheit nach einem der Ansprüche 1 bis 15, **dadurch gekennzeichnet, dass** ein Ritzel (9) des Fahrgetriebes auf einer Fahrmotorwelle (22) lösbar befestigbar ist.

17. Antriebs- und Lenkeinheit nach Anspruch 16, **dadurch gekennzeichnet, dass** die Verbindung des Ritzels der Fahrmotorwelle (22) durch eine verschließbare Öffnung im Drehschemelgehäuse (26) lösbar ist.

18. Antriebs- und Lenkeinheit nach einem der Ansprüche 2 bis 17, **dadurch gekennzeichnet, dass** eine Verbindung von Planetenträger und Drehschemel in tangentialer Richtung erfolgt und von der Außenseite des Drehschemelgehäuses oder durch eine verschließbare Öffnung des Drehschemelgehäuses lösbar ist.

19. Antriebs- und Lenkeinheit nach einem der Ansprüche 1 bis 18, **dadurch gekennzeichnet, dass** eine Radial- und Axialkraftaufnahme des zweiten Wälzlagers (33) mit einem ringförmigen Rahmenabschnitt (43) erfolgt, der in tangentialer Richtung lösbar mit einem anderen Rahmenabschnitt (36) verbunden ist.

20. Antriebs- und Lenkeinheit nach einem der Ansprüche 1 bis 19, **dadurch gekennzeichnet, dass** eine Ringplatte (36) und die Abstützung des getriebeseitigen Lagers (33) des Lenkmotors (18) separat oder einstückig sind.

21. Antriebs- und Lenkeinheit nach einem der Ansprüche 1 bis 20, **dadurch gekennzeichnet, dass** Fahr- und Lenkmotor (14, 18) in einem mehrteiligen Gehäuse aufgenommen sind, das zudem weitere Baugruppen, wie Sensoren, Steuerung oder dergleichen beinhaltet.

22. Antriebs- und Lenkeinheit nach einem der Ansprüche 1 bis 21, **dadurch gekennzeichnet, dass** Fahr- und Lenkmotor in einem gemeinsamen Gehäuse (1) aufgenommen sind, das weitere Baugruppen wie Sensoren oder Steuerung (3) beinhaltet.

## Claims

1. Drive and steering unit for a wheel of an industrial truck, wherein a travel motor and a steering motor are disposed coaxially one below the other and are each coupled to a shaft of the wheel or to a fifth wheel bearing said wheel, respectively, via a travel gearbox and a steering gear system, respectively, wherein one shaft is a hollow shaft and the other shaft extends through the hollow shaft, **characterised in that** a single-step or multi-step planetary stepping gear system or a planetary coupler mechanism gear system or eccentric gear or reduced planetary coupler mechanism gear system is provided and the bearing of the fifth wheel (26) in the form of at least one rolling bearing is disposed inside the steering gear system.

2. Drive and steering unit according to claim 1, **characterised in that** a planet carrier (32) connected to the fifth wheel (26) serves for the accommodation of the fifth wheel's bearing.

3. Drive and steering unit according to claim 2, **characterised in that** a first rolling bearing (33) is arranged between the first planet carrier (32) of a first planetary gear step and a first frame portion, and a second rolling bearing (52) in an axial distance to the first rolling bearing (33) is arranged between the first planet carrier (32) and a second frame portion or a frame-fixed second planet carrier (34) of the second planetary gear step.

4. Drive and steering unit according to claim 3, **characterised in that** the first planet carrier is connected to a portion (48) of the fifth wheel (26).

5. Drive and steering unit according to claim 3 or 4, **characterised in that** the first frame portion (36) is formed by a ring plate whose inner perimeter supports the first rolling bearing (33).

6. Drive and steering unit according to any one of claims 2 to 5, **characterised in that** the output of the planetary gear is formed by a planet carrier (32) fixed on the fifth wheel (26) and a hollow wheel (48) meshing with a step of the planetary wheels and connected to the fifth wheel (26).

7. Drive and steering unit according to claim 1 or any one of claims 2 to 6, **characterised in that** a contacting seal (50) is disposed between a fifth wheel portion and a casing for the motors (14, 18) and for the steering gear system.

8. Drive and steering unit according to claim 6 or 7, **characterised in that** the contacting seal (50) is disposed on the hollow wheel (48).

9. Drive and steering unit according to any one of claims 3 to 8, **characterised in that** a frame-fixed ring plate (36) and a frame-fixed planet carrier (34) resting on each other sit close to a frame portion (30) at one side, and at the opposing side on the end of a facing casing part (16) of the casing for the unit.

10. Drive and steering unit according to claim 1 or any one of claims 2 to 9, **characterised in that** when realised as a planetary stepping gear system, a spigot (70) connected to the fifth wheel (26) serves for the accommodation of the fifth wheel's bearing.

11. Drive and steering unit according to claim 10, **characterised in that** two tapered roller bearings (72, 74) in an axial distance from each other are disposed on the spigot (70).

12. Drive and steering unit according to claim 1 or any one of claims 2 to 10, **characterised in that** when realised as a planetary stepping gear system, the planet wheels of both steps are in active connection with each other via a connection shaft (68).

13. Drive and steering unit according to claim 1, **characterised in that** a planetary gearbox (5) is disposed before the planetary coupler mechanism gear system (6).

14. Drive and steering unit according to claim 1, **characterised in that** a planetary gearbox (7) is disposed before the planetary stepping gear system (8).

15. Drive and steering unit according to any one of claims 1 to 14, **characterised in that** the connection of planet carrier and fifth wheel takes place in the axial direction and is detachable from the outer side of the fifth wheel casing or through a closable opening of the fifth wheel casing.

16. Drive and steering unit according to any one of claims 1 to 15, **characterised in that** a pinion (9) of the travel gearbox can be detachably fastened on a travel motor shaft (22).

17. Drive and steering unit according to claim 16, **characterised in that** the connection of the pinion of the travel motor shaft (22) is detachable through a closable opening in the fifth wheel casing (26).

18. Drive and steering unit according to any one of claims 2 to 17, **characterised in that** a connection of planet carrier and fifth wheel takes place in the tangential direction and is detachable from the outer side of the fifth wheel casing or through a closable opening of the fifth wheel casing.

19. Drive and steering unit according to any one of claims 1 to 18, **characterised in that** a radial and axial force resistance of the second rolling bearing (33) takes place by a ring-shaped frame portion (43), which is connected to another frame portion (36) and detachable in the tangential direction.

20. Drive and steering unit according to any one of claims 1 to 19, **characterised in that** a ring plate (36) and the support of the gearbox side bearing (33) of the steering motor (18) are separate or in one piece.

21. Drive and steering unit according to any one of claims 1 to 20, **characterised in that** travel- and steering motor (14, 18) are accommodated in a multi-part casing which includes also further structural components, like sensors, control unit or the like.

22. Drive and steering unit according to any one of claims 1 to 21, **characterised in that** travel- and steering motor (14, 18) are accommodated in a common casing (1) which includes further structural components like sensors or a control unit (3).

## Revendications

1. Unité d'entraînement et d'orientation d'une roue de chariot élévateur, dans laquelle un moteur de traction et un moteur d'orientation sont disposés de façon coaxiale l'un au-dessous de l'autre et chacun est accouplé à un arbre de la roue ou respectivement d'une traverse pivotante logeant la roue à travers une transmission de traction ou respectivement une transmission d'orientation, un arbre étant un arbre creux et l'autre arbre s'étendant à travers l'arbre creux, **caractérisée en ce que** un variateur de vitesse à engrenage planétaire à simple ou plusieurs réduction(s) ou un engrenage planétaire couplé ou engrenage excentrique ou engrenage planétaire couplé réduit est pourvu pour la transmission d'orientation et que le roulement de la traverse pivotante (26) est disposé en la forme d'au moins un palier à roulement au-dedans de la transmission d'orientation.

2. Unité d'entraînement et d'orientation selon la revendication 1, **caractérisée en ce que** un porte-satellites (32) relié à la traverse pivotante (26) sert pour le logement du roulement de la traverse pivotante.

3. Unité d'entraînement et d'orientation selon la revendication 2, **caractérisée en ce que** un premier palier à roulement (33) est disposé entre le premier porte-satellites (32) d'un premier étage de réduction de l'engrenage planétaire et une première section du cadre, et un deuxième palier à roulement (52) en distance axiale au premier palier à roulement (33) est disposé entre le premier porte-satellites (32) et la deuxième section du cadre ou un deuxième porte-satellites (34) monté sur cadre du deuxième étage de réduction de l'engrenage planétaire.

4. Unité d'entraînement et d'orientation selon la revendication 3, **caractérisée en ce que** le premier porte-satellites est relié à une section (48) de la traverse pivotante (26).

5. Unité d'entraînement et d'orientation selon la revendication 3 or 4, **caractérisée en ce que** la première section du cadre (36) est formée par une plaque annulaire dont la circonférence intérieure supporte le premier palier à roulement (33).

6. Unité d'entraînement et d'orientation selon l'une quelconque des revendications 2 à 5, **caractérisée en ce que** la sortie de l'engrenage planétaire est formée par un porte-satellites (32) fixé sur la traverse pivotante (26) et par une roue creuse (48) s'engrenant à un étage de réduction des roues planétaires et reliée à la traverse pivotante (26).

7. Unité d'entraînement et d'orientation selon la revendication 1 ou selon l'une quelconque des revendications 2 à 6, **caractérisée en ce que** un étoupage à contact (50) est disposé entre une section de la traverse pivotante et un boîtier pour les moteurs (14, 18) et pour la transmission d'orientation.

8. Unité d'entraînement et d'orientation selon la revendication 6 or 7, **caractérisée en ce que** le étoupage à contact (50) est disposé sur la roue creuse (48).

9. Unité d'entraînement et d'orientation selon l'une quelconque des revendications 3 à 8, **caractérisée en ce que** une plaque annulaire (36) montée sur cadre et un porte-satellites (34) monté sur cadre reposant l'un sur l'autre sont contigus à une section du cadre (30) dans un côté, et dans le côté opposé à l'extrémité Vis à vis d'une partie de boîtier (16) du boîtier pour l'unité.

10. Unité d'entraînement et d'orientation selon la revendication 1 ou selon l'une quelconque des revendications 2 à 9, **caractérisée en ce que** dans la réalisation comme variateur de vitesse à engrenage planétaire, un pivot (70) relié à la traverse pivotante (26) sert pour le logement du roulement de la traverse pivotante.

11. Unité d'entraînement et d'orientation selon la revendication 10, **caractérisée en ce que** deux paliers coniques à rouleaux (72, 74) en distance axiale de l'une à l'autre sont disposés sur le pivot (70).

12. Unité d'entraînement et d'orientation selon la revendication 1 ou selon l'une quelconque des revendications 2 à 10, **caractérisée en ce que** dans la réalisation comme variateur de vitesse à engrenage planétaire, les roues planétaires des deux étapes de réduction sont en connexion active entre eux via un arbre de connexion (68).

13. Unité d'entraînement et d'orientation selon la revendication 1, **caractérisée en ce que** un engrenage planétaire (5) est disposé avant l'engrenage planétaire couplé (6).

14. Unité d'entraînement et d'orientation selon la revendication 1, **caractérisée en ce que** un engrenage planétaire (7) est disposé avant le variateur de vitesse à engrenage planétaire (8).

15. Unité d'entraînement et d'orientation selon l'une quelconque des revendications 1 à 14, **caractérisée en ce que** la connexion du porte-satellites et la traverse pivotante se fait dans la direction axiale et est amovible à partir du côté extérieur du boîtier de la traverse pivotante ou à travers une ouverture verrouillable du boîtier de la traverse pivotante.

16. Unité d'entraînement et d'orientation selon l'une quelconque des revendications 1 à 15, **caractérisée en ce que** un pignon (9) de la transmission de traction peut être fixé de façon détachable sur un arbre du moteur de traction (22).

17. Unité d'entraînement et d'orientation selon la revendication 16, **caractérisée en ce que** la connexion du pignon de l'arbre du moteur de traction (22) est détachable à travers une ouverture verrouillable dans le boîtier de la traverse pivotante (26).

18. Unité d'entraînement et d'orientation selon l'une quelconque des revendications 2 à 17, **caractérisée en ce que** une connexion du porte-satellites et la traverse pivotante se fait dans la direction tangentielle et est amovible à partir du côté extérieur du boîtier de la traverse pivotante ou à travers une ouverture verrouillable du boîtier de la traverse pivotante.

19. Unité d'entraînement et d'orientation selon l'une quelconque des revendications 1 à 18, **caractérisée en ce que** une absorption des forces radiale et axiale du deuxième palier à roulement (33) se fait par une section annulaire du cadre (43), qui est reliée à une autre section du cadre (36) de façon détachable dans la direction tangentielle.

20. Unité d'entraînement et d'orientation selon l'une quelconque des revendications 1 à 19, **caractérisée en ce que** une plaque annulaire (36) et le support du palier (33) du moteur d'orientation (18) au côté de l'engrenage sont séparés ou en une seule pièce.

21. Unité d'entraînement et d'orientation selon l'une quelconque des revendications 1 à 20, **caractérisée en ce que** les moteurs de traction et d'orientation (14, 18) sont logés dans un boîtier en plusieurs parts qui comprend en outre des autres ensembles comme des capteurs, unité de commande ou choses pareilles.

22. Unité d'entraînement et d'orientation selon l'une quelconque des revendications 1 à 21, **caractérisée en ce que** les moteurs de traction et d'orientation sont logés dans un boîtier commun qui comprend des autres ensembles comme des capteurs ou une unité de commande (3).
